# EUROPÄISCHE PATENTSCHRIFT

(11) **EP 2 315 920 B1**
(45) Veröffentlichungstag und Bekanntmachung des Hinweises auf die Patenterteilung: **07.12.2011**
(21) Anmeldenummer: 09777136.4
(22) Anmeldetag: 11.07.2009
(51) Int. Cl.: F01L 1/344, F01L 13/00

(54) **ZAHNWELLENVERBINDUNG UND VENTILTRIEB MIT ZAHNWELLENVERBINDUNG ZWISCHEN EINER NOCKENWELLE UND VERSCHIEBBAREN NOCKENTRÄGERN**
SPLINED-SHAFT CONNECTION AND VALVE TIMING MECHANISM WITH A SPLINED-SHAFT CONNECTION BETWEEN A CAMSHAFT AND DISPLACEABLE CAM CARRIERS
LIAISON PAR CANNELURES ET MÉCANISME DE DISTRIBUTION AVEC LIAISON PAR CANNELURES ENTRE UN ARBRE À CAMES ET DES SUPPORTS DE CAME DÉPLAÇABLES

(30) Priorität: 31.07.2008 DE 102008035935
(43) Veröffentlichungstag der Anmeldung: 04.05.2011
(73) Patentinhaber: Audi AG, 85045 Ingolstadt (DE)
(72) Erfinder: DEBLAIZE, Marc, 74251 Lehrensteinsfeld (DE); DENGLER, Stefan, 85139 Wettstetten (DE)
(86) Internationale Anmeldenummer: PCT/EP2009/005057
(87) Internationale Veröffentlichungsnummer: WO 2010/012371

(56) Entgegenhaltungen:
- WO-A1-2004/083611
- DE-A1- 19 702 389

## Beschreibung

Die Erfindung betrifft eine Zahnwellenverbindung gemäß dem Oberbegriff des Anspruchs 1 und einen Ventiltrieb für Gaswechselventile einer Brennkraftmaschine gemäß dem Oberbegriff des Anspruchs 13, bei dem zwischen einer Nockenwelle und mehreren, drehfest und axial verschiebbar auf der Nockenwelle geführten Nockenträgern jeweils eine solche Zahnwellenverbindung vorgesehen ist.

Zahnwellenverbindungen sind formschlüssige Welle-Nabe-Verbindungen, die es gestatten, Drehmomente zwischen zwei um eine gemeinsame Drehachse rotierenden Bauelementen zu übertragen, von denen das eine in der Regel als Welle und die andere als Nabe bezeichnet wird. Das Drehmoment wird bei Zahnwellenverbindungen über die Zahnflanken benachbarter Zähne übertragen, die im Falle einer axialen Relativbeweglichkeit der beiden Bauteile nach Möglichkeit mit Spielpassung gegeneinander anliegen sollten, um durch Last- bzw. Drehmomentschwankungen bedingte Relativbewegungen zwischen den beiden Bauteilen in deren Dreh- oder Umfangsrichtung zu vermeiden. Die beiden im Zahneingriff befindlichen Verzahnungen, d.h. die Außenverzahnung der Welle und die Innenverzahnung der Hohlwelle oder Nabe, sind gewöhnlich entweder Evolventenverzahnungen (DIN 5480) oder Verzahnungen mit gerader Flankenform (DIN 5481).

Bekannte Zahnwellenverbindungen wie in Dokument DE 197 02389 A1 offengelegt, sind flankenzentrierte Verbindungen, bei denen die Flanken neben der Übertragung der Drehmomente auch dazu dienen, die Hohlwelle oder Nabe auf der Welle zu zentrieren. Insbesondere bei gewalzten Zahnprofilen kann es jedoch infolge von Fertigungstoleranzen zu einem größeren radialen Spiel zwischen den beiden in Zahneingriff stehenden Verzahnungen kommen, was bei flankenzentrierten Verbindungen auch zu einem größeren Spiel zwischen den gegenüberliegenden Flanken der Zähne der Innen- und Außenverzahnung und damit bei Last- oder Drehmomentschwankungen zu Relativbewegungen in Dreh- oder Umfangsrichtung der Bauteile führt.

Ausgehend hiervon liegt der Erfindung die Aufgabe zugrunde, eine Zahnwellenverbindung und einen Ventiltrieb der eingangs genannten Art dahingehend zu verbessern, dass ein radialer Spielausgleich in der Zahnwellenverbindung bzw. eine radiale Lagerung und Zentrierung der Hohlwelle oder Nabe auf der Welle ermöglicht wird.

Diese Aufgabe wird erfindungsgemäß dadurch gelöst, dass sich die beiden Verzahnungen über einen Teil ihrer Länge im Bereich eines Kopfkreisdurchmessers und/oder eines Fußkreisdurchmessers der Außenverzahnung mit Spielpassung gegenüberliegen und sich im Bereich von Zahnflanken der Innen- und Außenverzahnung in einem größeren Abstand gegenüberliegen, und dass sich die beiden Verzahnungen über einen anderen Teil ihrer Länge im Bereich von Zahnflanken der Innen- und Außenverzahnung mit Spielpassung gegenüberliegen, während sie sich im Bereich des Kopfkreisdurchmessers und des Fußkreisdurchmessers der Außenverzahnung mit radialem Spiel gegenüberliegen.

Der Erfindung liegt der Gedanke zugrunde, durch die erfindungsgemäße Maßnahme die zur Drehmomentübertragung und die zur Zentrierung dienenden Bereiche der beiden Verzahnungen in axialer Richtung zu entkoppeln bzw. voneinander zu trennen.

Da sich die Außenverzahnung leichter als die Innenverzahnung bearbeiten lässt, sieht eine bevorzugte Ausgestaltung der Erfindung vor, dass die Innenverzahnung über ihre gesamte Länge ein gleichbleibendes Profil besitzt, während die Außenverzahnung in axialer Richtung der Welle in mindestens zwei Abschnitte unterteilt ist, die unterschiedliche Profile besitzen.

Vorzugsweise besitzen bei gleicher Zähnezahl in den beiden Abschnitten die Zähne der Außenverzahnung in dem oder jedem zur Drehmomentübertragung dienenden Abschnitt eine etwas größere Breite und eine etwas geringere Höhe als in dem oder jedem zur Zentrierung dienenden Abschnitt, um eine Montage der Hohlwelle zu ermöglichen.

Eine weitere bevorzugte Ausgestaltung der Erfindung sieht vor, dass die Außenverzahnung in axialer Richtung der Welle in drei Abschnitte mit unterschiedlichem Profil unterteilt ist, von denen vorzugsweise ein mittlerer Abschnitt zur Drehmomentübertragung dient, während zwei beiderseits des mittleren Abschnitts angeordnete Abschnitte zur direkten Lagerung und radialen Zentrierung dienen. Möglich wäre jedoch auch, die Außenverzahnung in axialer Richtung der Welle in vier Abschnitte mit paarweise unterschiedlichem Profil zu unterteilen, von denen jeweils zwei zur Drehmomentübertragung bzw. zur Lagerung und radialen Zentrierung dienen, wobei sich die zur Drehmomentübertragung bzw. zur radialen Zentrierung dienenden Abschnitte abwechseln.

Die Abschnitte, in denen die Außenverzahnung der Welle mit einem unterschiedlichen Profil versehen ist, sind zweckmäßig durch schmale zylindrische Abschnitte ohne Verzahnung getrennt, um eine unterschiedliche Bearbeitung der einzelnen Abschnitte zu erleichtern.

Im folgenden wird die Erfindung anhand eines in der Zeichnung dargestellten Ausführungsbeispiels näher erläutert. Es zeigen:
Fig. 1: eine Oberseitenansicht von Teilen eines Ventiltriebs für Paare von Einlassventilen von drei Zylindern eines 6-Zylinder-V-Motors mit mehreren auf einer Nockenwelle verschiebbaren Nockenträgern;
Fig. 2: eine horizontale Längsschnittansicht entlang einer Mittelachse der Nockenwelle;
Fig. 3: eine vergrößerte Ansicht eines Abschnitts der Nockenwelle aus Fig. 2 mit einem Nockenträger;
Fig. 4: eine Ansicht entsprechend Fig. 3, die eine Außenverzahnung der Nockenwelle zeigt;
Fig. 5: eine Detailansicht des Eingriffs eines Zahns der Außenverzahnung der Nockenwelle zwischen zwei Zähne der Innenverzahnung des Nockenträgers in einem ersten und dritten Abschnitt der Außenverzahnung
Fig. 6: eine Detailansicht des Eingriffs eines Zahns der Außenverzahnung der Nockenwelle zwischen zwei Zähne der Innenverzahnung des Nockenträgers in einem zweiten und vierten Abschnitt der Außenverzahnung.

Bei dem in der Zeichnung nur teilweise dargestellten Ventiltrieb 1 für Paare von Einlassventilen von drei Zylindern 2 eines 6-Zylinder-Dieselmotors in V-Bauweise mit einer obenliegenden, in einem Zylinderkopfgehäuse des Dieselmotors drehbar gelagerten Nockenwelle 3 lassen sich der Hub und die Öffnungszeiten der beiden von der Nockenwelle 3 betätigten Einlassventile jedes Zylinders 2 verstellen.

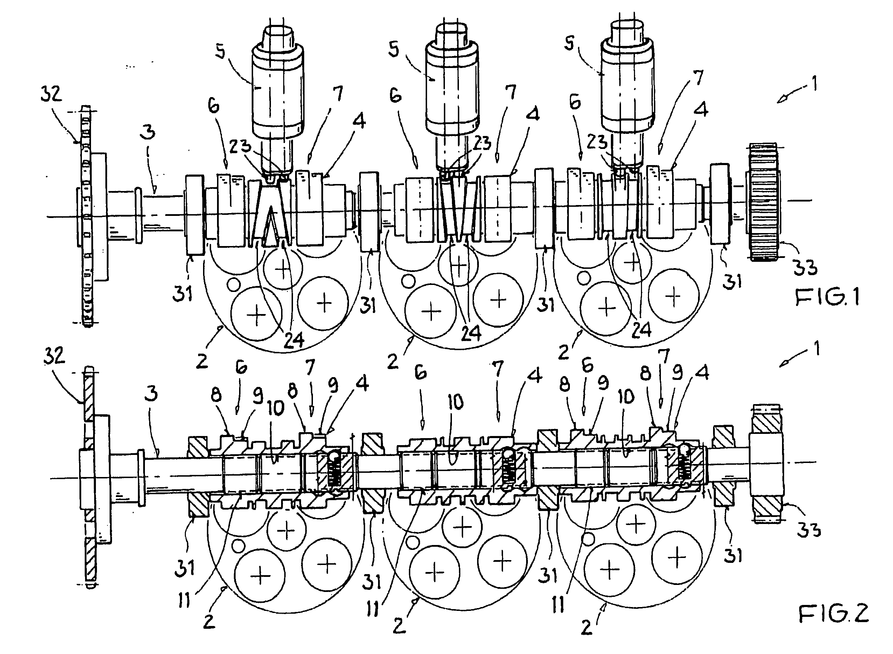

Der Ventiltrieb 1 umfasst dazu für jeden Zylinder 2 bzw. für jedes Paar von Einlassventilen einen drehfest und axial verschiebbar auf der Nockenwelle 3 montierten Nockenträger 4, sowie einen Aktuator 5 (Fig. 1) zum Verschieben des Nockenträgers 4 zwischen zwei im axialen Abstand voneinander angeordneten definierten Verschiebestellungen.

Die drei hohlzylindrischen Nockenträger 4 weisen an ihrem äußeren Umfang jeweils zwei im axialen Abstand voneinander angeordnete Nockenpaare 6, 7 auf, von denen jedes aus zwei Nocken 8, 9 (Fig. 2) mit unterschiedlichen Hubkonturen besteht. Jedes der beiden Nockenpaare 6, 7 wirkt mit einer Rolle eines schwenkbar gelagerten Rollenschlepphebels (nicht dargestellt) des zugehörigen Einlassventils zusammen. Durch eine axiale Verschiebung des Nockenträgers 4 kann die Rolle nach Bedarf mit einem der beiden Nocken 8, 9 des Nockenpaars 6 bzw. 7 in Anlagekontakt gebracht werden, so dass sie sich während jeder Umdrehung der Nockenwelle 3 einmal über die Hubkontur des Nockens 8, 9 hinwegbewegt und dabei den Rollenschlepphebel unter Öffnen des Ventils verschwenkt. Durch unterschiedliche Hubkonturen der beiden Nocken 8, 9 können der Hub und die Öffnungszeit jedes Ventils in Abhängigkeit von der Verschiebestellung des Nockenträgers 4 unabhängig vom Hub und der Öffnungszeit der Ventile der anderen Zylinder 2 zum Beispiel drehzahlabhängig verändert werden.

Um die axiale Verschiebung der Nockenträger 4 auf der Nockenwelle 3 zu ermöglichen, weisen die hohlzylindrischen Nockenträger 4 an ihrem inneren Umfang eine Innenverzahnung 10 auf, die mit einer Außenverzahnung 11 auf der Nockenwelle 3 kämmt und zwischen der Nockenwelle 3 und jedem Nockenträger 4 eine Zahnwellenverbindung mit axialer Relativbeweglichkeit bildet, die dazu dient, Drehmomente zwischen der Nockenwelle 3 und dem Nockenträger 4 zu übertragen und den Nockenträger 4 direkt auf der Nockenwelle 3 zu lagern bzw. zu zentrieren.

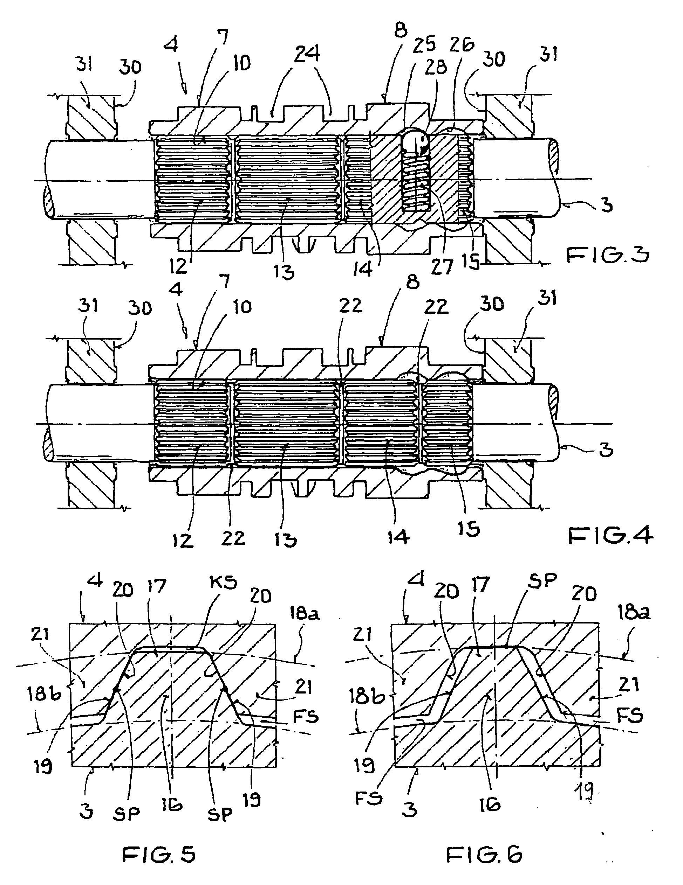

Um die Drehmomentübertragungsfunktion von der Lagerungs- und Zentrierfunktion zu trennen, weist die Außenverzahnung 11 der Nockenwelle 3 für jeden Nockenträger 4 vier in axialer Richtung voneinander getrennte Abschnitte 12, 13, 14, 15 mit paarweise unterschiedlichen Zahnprofilen auf, wie am besten in Fig. 3 und 4 dargestellt. Die vier Abschnitte 12, 13, 14, 15 weisen jeweils unterschiedliche Längen auf und erstrecken sich zusammen über eine Gesamtlänge, die im Wesentlichen der Länge des Nockenträgers 4 entspricht, wobei sie sämtlich im Zahneingriff mit der Innenverzahnung 10 stehen, die über ihre gesamte Länge dasselbe Zahnprofil besitzt.

Während die beiden durch den Abschnitt 14 getrennten Abschnitte 13 und 15 zur Drehmomentübertragung dienen, dienen die beiden durch den Abschnitt 13 getrennten Abschnitte 12 und 14 zur direkten radialen Lagerung des Nockenträgers 4 auf der Nockenwelle 3 und zur Zentrierung des Nockenträgers 4 und der Nockenwelle 3 in Bezug zur Drehachse der Nockenwelle 3. Die Zahnprofile beider Abschnitte werden bevorzugt gleichzeitig gefertigt bzw. gewalzt.

Wie am besten in Fig. 5 dargestellt, ist das Zahnprofil der Außenverzahnung 11 in den Abschnitten 13 und 15 so an das Zahnprofil der Innenverzahnung 10 angepasst, dass sich Zähne 16 der Außenverzahnung 11 der Nockenwelle 3 und benachbarte Zähne 21 der Innenverzahnung 10 jedes Nockenträgers 4 entlang ihrer einander zugewandten Flanken 19, 20 mit Spielpassung gegenüberliegen, während entlang eines Kopfkreisdurchmessers 18a der Außenverzahnung 11 in üblicher Weise ein Kopfspiel KS zwischen einem Kopf 17 der Zähne 16 und einem gegenüberliegenden Bereich der Innenverzahnung 10 vorhanden ist, so dass es dort nicht zu einem Kontakt der Zähne 16, 21 kommt. Außerdem ist auch entlang eines Fußkreisdurchmessers 18b der Außenverzahnung 11 in üblicher Weise ein Fußspiel FS zwischen einem Kopf der Zähne 21 der Innenverzahnung 10 und einem gegenüberliegenden Bereich der Außenverzahnung 11 vorhanden, so dass es dort ebenfalls nicht zu einem Kontakt der Zähne 21, 16 kommt. Wie bei herkömmlichen Zahnrädern beträgt das Kopfspiel KS bzw. das Fußspiel FS zwischen 0,1 und 0,3 m, wobei m der Modul der Außenverzahnung 11 ist.

Wie am besten in Fig. 6 dargestellt, ist das Zahnprofil der Außenverzahnung 11 in den Abschnitten 12 und 14 so an das Zahnprofil der Innenverzahnung 10 angepasst, dass die Zähne 16 der Außenverzahnung 11 mit ihrem Kopf 17 entlang eines Teils des Kopfkreisdurchmessers 18a der Außenverzahnung 11 mit Spielpassung SP der Innenverzahnung 10 gegenüberliegen, während sie entlang von ihren entgegengesetzten Zahnflanken 19 einen größeren Abstand A von den jeweils gegenüberliegenden Zahnflanken 20 der Zähne 21 der Innenverzahnung 10 aufweisen. Der Abstand A ist so bemessen, dass es an den Zahnflanken 19, 20 nicht zu einem Kontakt der Zähne 16, 21 kommt. In jedem Fall ist der Abstand A erheblich größer als ein oberes Spiel bzw. eine Obergrenze der Spielpassung SP und ist vorzugsweise auch größer das Kopfspiel KS, das heißt größer als 0,1 bis 0,3 m.

Alternativ oder zusätzlich können in entsprechender Weise die Zähne 21 der Innenverzahnung 10 mit ihrem Kopf entlang eines Teils eines Fußkreisdurchmessers 18b der Außenverzahnung 11 mit Spielpassung SP der Innenverzahnung 10 gegenüberliegen, während sie entlang von ihren entgegengesetzten Zahnflanken 20 einen größeren Abstand A von den jeweils gegenüberliegenden Zahnflanken 19 der Zähne 16 der Außenverzahnung 11 aufweisen. Der Abstand A ist ebenfalls so bemessen, dass es an den Zahnflanken 20, 19 nicht zu einem Kontakt der Zähne 21, 16 kommt. In jedem Fall ist der Abstand A erheblich größer als ein oberes Spiel bzw. eine Obergrenze der Spielpassung SP und ist vorzugsweise auch größer das Fußspiel FS, das heißt größer als 0,1 bis 0,3 m.

Die in sämtlichen Abschnitten vorhandene Spielpassung SP zwischen den beiden Verzahnungen 10, 11 gestattet die axiale Verschiebung der Nockenträger 4 auf der Nockenwelle 3. Die jeweils benachbarten Abschnitte 12, 13 bzw. 13, 14 bzw. 14, 15 sind durch schmale ringförmige Abschnitte 22 der Nockenwelle 3 ohne Verzahnung getrennt.

Die Außenverzahnung 11 auf der Nockenwelle 3 wird hergestellt, indem zuerst die beiden Paare von Abschnitten 12 und 14 bzw. 13 und 15 mit jeweils unterschiedlichen Profilen gewalzt werden, wobei der Abstand der beiden entgegengesetzten Flanken 19 der Zähne 16 in den Abschnitten 13 und 15 größer als in den Abschnitten 12 und 16 ist.

Im Fall einer radialen Lagerung eines Nockenträgers 4 entlang des Kopfkreisdurchmessers 18 der Außenverzahnung 11 der Nockenwelle 3 werden nach dem Walzen in den Abschnitten 13 und 15 die Köpfe 17 der Zähne 16 zusätzlich abgeschliffen, da der Kopfkreisdurchmesser 18 der Außenverzahnung 11 der Nockenwelle 3 beim Walzen nicht genau genug gefertigt werden kann.

Aus diesem Grund wird eine radiale Lagerung des Nockenträgers 4 entlang des Fußkreisdurchmessers 18b der Außenverzahnung 11 der Nockenwelle 3 bevorzugt, da der Fußkreisdurchmesser 18b der Außenverzahnung 11 der Nockenwelle 3 und der gegenüberliegende Kopfkreisdurchmesser der Innenverzahnung 10 jedes Nockenträgers 4 fertig gewalzt werden können.

Die axiale Verschiebung eines Nockenträgers 7 auf der Nockenwelle 4 in eine der beiden definierten Verschiebestellungen zur Verstellung des Hubs und/oder der Öffnungszeiten der zugehörigen Einlassventile 2 erfolgt bei Bedarf und wird immer dann vorgenommen, wenn Grundkreisabschnitte der Nockenpaare 8, 9 den Rollen der zugehörigen Schlepphebel gegenüberliegen. Zur Verschiebung wird jeweils der Aktuator 5 betätigt, der zwei nebeneinander angeordnete Mitnehmer 23 (Fig. 1) aufweist, die sich aus dem Aktuator 5 ausfahren lassen. Bei der Betätigung des Aktuators 5 wird einer der beiden Mitnehmer 23 beim Ausfahren in eine links- bzw. rechtsgängige schraubenförmige Nut 24 im äußeren Umfang des Nockenträgers 4 eingespurt, die dem einspurenden Mitnehmer 23 in einer der beiden Verschiebestellungen gegenüberliegt, um den Nockenträger 4 während einer anschließenden Umdrehung der Nockenwelle 3 infolge der Bewegung des Mitnehmers 23 durch die schraubenförmige Nut 24 nach links bzw. nach rechts in die jeweils andere Verschiebestellung zu verschieben.

Der Abstand der beiden Verschiebestellungen entspricht dem Mittenabstand der beiden Nocken 10, 11 jedes Nockenpaars 8, 9 sowie dem axialen Abstand zweier Arretiernuten 25, 26 (Fig. 3), die in der Nähe eines Stirnendes jedes Nockenträgers 4 in dessen innerem Umfang ausgespart sind. Die beiden Arretiernuten 25, 26 dienen zur Arretierung des Nockenträgers 4 in den beiden definierten Verschiebestellungen. Die Arretierung erfolgt, indem eine in einer Querbohrung 27 der Nockenwelle 4 angeordnete Arretierkugel 28 durch die Kraft einer Schraubendruckfeder 29 gegen eine schräge Flanke von einer der beiden Nuten 25, 26 angepresst und dadurch eine axiale Kraftkomponente in den Nockenträger 4 eingeleitet wird, um diesen gegen eine als Anschlag dienende Stirnfläche 30 eines benachbarten Drehlagers 31 anzupressen, wie am besten in Fig. 3 und 4 dargestellt.

Der Antrieb der Nockenwelle 4 erfolgt über ein Ketterad 32 an einem Stirnende der Nockenwelle 4, während ein Zahnrad 33 am entgegengesetzten Stirnende eine A-Welle treibt.

### BEZUGSZEICHENLISTE

- 1: Ventiltrieb
- 2: Zylinder
- 3: Nockenwelle
- 4: Nockenträger
- 5: Aktuator
- 6: Nockenpaar
- 7: Nockenpaar
- 8: Nocken
- 9: Nocken
- 10: Innenverzahnung
- 11: Außenverzahnung
- 12: Abschnitt Außenverzahnung
- 13: Abschnitt Außenverzahnung
- 14: Abschnitt Außenverzahnung
- 15: Abschnitt Außenverzahnung
- 16: Zahn Außenverzahnung
- 17: Zahnkopf
- 18a: Kopfkreisdurchmesser Außenverzahnung
- 18b: Fußkreisdurchmesser Außenverzahnung
- 19: Zahnflanken Außenverzahnung
- 20: Zahnflanken Innenverzahnung
- 21: Zahn Innenverzahnung
- 22: ringförmige Abschnitte
- 23: Mitnehmer Aktuator
- 24: schraubenförmige Nut
- 25: Arretiemut
- 26: Arretiernut
- 27: Querbohrung Nockenwelle
- 28: Arretierkugel
- 29: Schraubendruckfeder
- 30: Anschlagfläche
- 31: Drehlager
- 32: Kettenrad
- 33: Zahnrad

## Patentansprüche

1. Zahnwellenverbindung zwischen einer mit einer Innenverzahnung (10) versehenen Hohlwelle (4) oder Nabe und einer mit einer Außenverzahnung (11) versehenen Welle (3), **dadurch gekennzeichnet, dass** sich die beiden Verzahnungen (10, 11) über einen Teil ihrer Länge im Bereich eines Kopfkreisdurchmessers (18a) und/oder eines Fußkreisdurchmessers (18b) der Außenverzahnung (11) mit Spielpassung (SP) gegenüberliegen und sich im Bereich von benachbarten Zahnflanken (20, 19) der Innen- und Außenverzahnung (10, 11) in einem größeren Abstand gegenüberliegen, und dass sich die beiden Verzahnungen (10, 11) über einen anderen Teil ihrer Länge im Bereich der benachbarten Zahnflanken (20, 19) der Innen- und Außenverzahnung (10, 11) mit Spielpassung (SP) gegenüberliegen, während sie sich im Bereich des Kopfkreisdurchmessers (18a) und des Fußkreisdurchmessers (18b) der Außenverzahnung (11) mit radialem Spiel (KS, FS) gegenüberliegen.

2. Zahnwellenverbindung nach Anspruch 1, **dadurch gekennzeichnet, dass** der Abstand zwischen der Innen und Außenverzahrung (10, 11) größer als ein oberes Spiel der Spielpassung (SP) und/oder größer als das radiale Spiel (KS, FS) ist.

3. Zahnwellenverbindung nach Anspruch 2, **dadurch gekennzeichnet, dass** das radiale Spiel (KS, FS) zwischen 0,1 und 0,3 m liegt, wobei m der Modul der Außenverzahnung (11) ist.

4. Zahnwellenverbindung nach einem der vorangehenden Ansprüche, **dadurch gekennzeichnet, dass** die Innenverzahnung (10) über ihre gesamte Länge ein gleichbleibendes Profil besitzt.

5. Zahnwellenverbindung nach einem der vorangehenden Ansprüche, **dadurch gekennzeichnet, dass** die Außenverzahnung (11) in axialer Richtung in mindestens zwei Abschnitte (12, 13, 14, 15) unterteilt ist, die unterschiedliche Profile besitzen.

6. Zahnwellenverbindung nach Anspruch 5, **dadurch gekennzeichnet, dass** in einem der beide Abschnitte (12, 14 bzw. 13, 15) Zähne (16) der Außenverzahnung (11) eine größere Breite als in dem anderen der beiden Abschnitte (13, 15 bzw. 12, 14) besitzen.

7. Zahnwellenverbindung nach Anspruch 5 oder 6, **dadurch gekennzeichnet, dass** in einem der beide Abschnitte (12, 14 bzw. 13, 15) Zähne (16) der Außenverzahnung (11) eine geringere Höhe als in dem anderen der beiden Abschnitte (13, 15 bzw. 12, 14) besitzen.

8. Zahnwellenverbindung nach einem der vorangehenden Ansprüche, **dadurch gekennzeichnet, dass** die Außenverzahnung (11) in axialer Richtung in drei oder vier Abschnitte (12, 13, 14, 15) unterteilt ist, wobei beiderseits eines Abschnitts (13), in dem sich die beiden Verzahnungen (10, 11) im Bereich der benachbarten Zahnflanken (20, 19) der Innen- und Außenverzahnungen (10, 11) mit Spielpassung (SP) gegenüberliegen, ein Abschnitt (12, 14) angeordnet ist, in dem sich die beiden Verzahnungen (10, 11) im Bereich des Kopfkreisdurchmessers (18a) und/oder des Fußkreisdurchmessers (18b) der Außenverzahnung (11) mit Spielpassung (SP) gegenüberliegen.

9. Zahnwellenverbindung nach einem der vorangehenden Ansprüche, **dadurch gekennzeichnet, dass** die Außenverzahnung (11) in axialer Richtung in drei oder vier Abschnitte (12, 13, 14, 15) unterteilt ist, wobei beiderseits eines Abschnitts (14), in dem sich die beiden Verzahnungen (10, 11) im Bereich des Kopfkreisdurchmessers (18a) und/oder des Fußkreisdurchmessers (18b) der Außenverzahnung (11) mit Spielpassung (SP) gegenüberliegen, ein Abschnitt (13, 15) angeordnet ist, in dem sich die beiden Verzahnungen (10, 11) im Bereich der benachbarten Zahnflanken (20, 19) der Innen- und Außenverzahnungen (10, 11) mit Spielpassung (SP) gegenüberliegen.

10. Zahnwellenverbindung nach einem der vorangehenden Ansprüche, **dadurch gekennzeichnet, dass** die Außenverzahnung (11) in axialer Richtung der Welle in vier Abschnitte (12, 13, 14, 15) unterteilt ist, wobei sich jeweils zwei Abschnitte (12, 14; 13, 15) mit unterschiedlichem Profil paarweise abwechseln.

11. Zahnwellenverbindung nach einem der Ansprüche 5 bis 10, **dadurch gekennzeichnet, dass** benachbarte Abschnitte (12, 13, 14, 15) durch schmale zylindrische Abschnitte (22) getrennt sind.

12. Zahnwellenverbindung nach einem der Ansprüche 5 bis 11, **dadurch gekennzeichnet, dass** die Abschnitte (12, 13, 14, 15) mindestens teilweise unterschiedliche axiale Längen besitzen.

13. Ventiltrieb (1) für Gaswechselventile einer Brennkraftmaschine, mit einer mindestens abschnittsweise mit einer Außenverzahnung (11) versehenen Nockenwelle (3) sowie mehreren mit einer Innenverzahnung (10) versehenen, drehfest und axial verschiebbar auf der Nockenwelle (3) geführten Nockenträgern (4), **gekennzeichnet durch** eine Zahnwellenverbindung nach einem der vorangehenden Ansprüche zwischen der die Welle bildenden Grundnockenwelle (3) und jedem der die Hohlwelle oder Nabe bildenden Nockenträger (4).

## Claims

1. Splined shaft connection between a hollow shaft (4) or hub provided with an internal toothing (10) and a shaft (3) provided with an external toothing (11), **characterized in that** the two toothings (10, 11), over one part of their length, face one another with a clearance fit (SP) in the region of a tip circle diameter (18a) and/or of a root circle diameter (18b) of the external toothing (11) and face one another with a greater spacing in the region of adjacent tooth flanks (20, 19) of the internal and external toothing (10, 11), and **in that** the two toothings (10, 11), over another part of their length, face one another with a clearance fit in the region of the adjacent tooth flanks (20, 19) of the internal and external toothing (10, 11) while facing one another with radial play (KS, FS) in the region of the tip circle diameter (18a) and of the root circle diameter (18b) of the external toothing (11).

2. Splined shaft connection according to Claim 1, **characterized in that** the spacing between the internal and external toothings (10, 11) is greater than an upper clearance value of the clearance fit (SP) and/or greater than the radial play (KS, FS).

3. Splined shaft connection according to Claim 2, **characterized in that** the radial play (KS, FS) lies between 0.1 and 0.3 m, where m is the modulus of the external toothing (11).

4. Splined shaft connection according to one of the preceding claims, **characterized in that** the internal toothing (10) has a uniform profile over its entire length.

5. Splined shaft connection according to one of the preceding claims, **characterized in that** the external toothing (11) is divided in the axial direction into at least two portions (12, 13, 14, 15) which have different profiles.

6. Splined shaft connection according to Claim 5, **characterized in that** teeth (16) of the external toothing (11) have a greater width in one of the two portions (12, 14 or 13, 15) than in the other of the two portions (13, 15 or 12, 14).

7. Splined shaft connection according to Claim 5 or 6, **characterized in that** teeth (16) of the external toothing (11) have a smaller height in one of the two portions (12, 14 or 13, 15) than in the other of the two portions (13, 15 or 12, 14).

8. Splined shaft connection according to one of the preceding claims, **characterized in that** the external toothing (11) is divided in the axial direction into three or four portions (12, 13, 14, 15), wherein at both sides of a portion (13) in which the two toothings (10, 11) face one another with a clearance fit (SP) in the region of the adjacent tooth flanks (20, 19) of the internal and external toothings (10, 11), there is arranged a portion (12, 14) in which the two toothings (10, 11) face one another with a clearance fit (SP) in the region of the tip circle diameter (18a) and/or of the root circle diameter (18b) of the external toothing (11).

9. Splined shaft connection according to one of the preceding claims, **characterized in that** the external toothing (11) is divided in the axial direction into three or four portions (12, 13, 14, 15), wherein at both sides of a portion (14) in which the two toothings (10, 11) face one another with a clearance fit (SP) in the region of the tip circle diameter (18a) and/or of the root circle diameter (18b) of the external toothing (11), there is arranged a portion (13, 15) in which the two toothings (10, 11) face one another with a clearance fit (SP) in the region of the adjacent tooth flanks (20, 19) of the internal and external toothings (10, 11).

10. Splined shaft connection according to one of the preceding claims, **characterized in that** the external toothing (11) is divided in the axial direction of the shaft into four portions (12, 13, 14, 15), wherein in each case two portions (12, 14; 13, 15) of different profile alternate in a paired fashion.

11. Splined shaft connection according to one of Claims 5 to 10, **characterized in that** adjacent portions (12, 13, 14, 15) are separated by narrow cylindrical portions (22).

12. Splined shaft connection according to one of Claims 5 to 11, **characterized in that** the portions (12, 13, 14, 15) are at least partially of different axial lengths.

13. Valve drive (1) for gas exchange valves of an internal combustion engine, having a camshaft (3) which is provided at least in sections with an external toothing (11), and having a plurality of cam carriers (4) which are provided with an internal toothing (10) and which are guided in a rotationally conjoint and axially movable manner on the camshaft (3), **characterized by** a splined shaft connection according to one of the preceding claims between the basic camshaft (3), which forms the shaft, and each of the cam carriers (4), which form the hollow shaft or hub.

## Revendications

1. Jonction par arbres cannelés entre un moyeu ou un arbre creux (4) pourvu d'un endentement intérieur (10) et un arbre (3) pourvu d'un endentement extérieur (11), **caractérisée en ce que** les deux endentements (10, 11) se situent face à face avec ajustement du jeu (SP) sur une partie de leur longueur dans la zone d'un diamètre circulaire de tête (18a) et/ou d'un diamètre circulaire de pied (18b) de l'endentement extérieur (11) et se situent face à face à plus grande distance dans la zone des flancs de dent (20, 19) connexes de l'endentement intérieur et extérieur (10, 11) et que les deux endentements (10, 11) se situent face à face avec ajustement du jeu (SP) sur une autre partie de leur longueur dans la zone des flancs de dent (20, 19) connexes de l'endentement intérieur et extérieur (10, 11), tandis qu'ils se situent face à face avec un jeu radial (KS, FS) dans la zone du diamètre circulaire de tête (18a) et du diamètre circulaire de pied (18b) de l'endentement à oeillet (11).

2. Jonction par arbres cannelés selon la revendication 1, **caractérisée en ce que** la distance entre l'endentement intérieur et extérieur (10, 11) est supérieure au jeu supérieur de l'ajustement du jeu (SP) et/ou supérieure au jeu radial (KS, FS).

3. Jonction par arbres cannelés selon la revendication 2, **caractérisée en ce que** le jeu radial (KS, FS) se situe entre 0,1 et 0,3 m, m étant le module de l'endentement extérieur (11).

4. Jonction par arbres cannelés selon l'une quelconque des revendications précédentes, **caractérisée en ce que** l'endentement intérieur (10) présente un profil régulier sur l'ensemble de sa longueur.

5. Jonction par arbres cannelés selon l'une quelconque des revendications précédentes, **caractérisée en ce que** l'endentement extérieur (11) est divisé en au moins deux sections (12, 13, 14, 15) dans la direction axiale, chacune d'elle présentant un profil différent.

6. Jonction par arbres cannelés selon la revendication 5, **caractérisée en ce que** dans chacune deux sections (12, 14 et/ou 13, 15), les dents (16) de l'endentement extérieur (11) possèdent une largeur supérieure que dans l'autre des deux sections (13, 15 et/ou 12, 14).

7. Jonction par arbres cannelés selon la revendication 5 ou 6, **caractérisée en ce que** dans chacune des deux sections (12, 14 et/ou 13, 15), les dents (16) de l'endentement extérieur (11) possèdent une hauteur plus réduite que dans l'autre des deux sections (13, 15 et/ou 12, 14).

8. Jonction par arbres cannelés selon l'une quelconque des revendications précédentes, **caractérisée en ce que** l'endentement extérieur (11) est divisé en trois ou quatre sections (12, 13, 14, 15) dans la direction axiale, une section (12, 14) dans laquelle les deux endentements (10, 11) se situant avec ajustement du jeu (SP) dans la zone du diamètre circulaire de tête (18a) et/ou du diamètre circulaire de pied (18b) de l'endentement à oeillet (11) étant disposée des deux côtés d'une section (13) dans laquelle les deux endentements (10, 11) se situent face à face avec ajustement du jeu (SP), dans la zone des flancs de dent (20, 19) connexes des endentements intérieur et extérieur (10, 11).

9. Jonction par arbres cannelés selon l'une quelconque des revendications précédentes, **caractérisée en ce que** l'endentement extérieur (11) est divisé en partie en trois ou quatre sections (12, 13, 14, 15) dans la direction axiale, une section (13, 15) dans laquelle les deux endentements (10, 11) se situant face à face avec ajustement du jeu (SP) dans la zone des flancs de dent (20, 19) connexes des endentements intérieur et extérieur (10, 11) étant disposée des deux côtés d'une section (14) dans laquelle les deux endentements (10, 11) se situent face à face avec ajustement du jeu (SP) dans la zone du diamètre circulaire de tête (18a) et/ou du diamètre circulaire de pied (18b) de l'endentement extérieur (11).

10. Jonction par arbres cannelés selon l'une quelconque des revendications précédentes, **caractérisée en ce que** l'endentement extérieur (11) se divise en partie dans la direction axiale de l'arbre en quatre sections (12, 13, 14, 15), deux sections (12, 14 ; 13, 15) de profils différents alternant respectivement par paire.

11. Jonction par arbres cannelés selon l'une quelconque des revendications 5 à 10, **caractérisée en ce que** les sections (12, 13, 14, 15) connexes sont séparées par des sections (22) cylindriques étroites.

12. Jonction par arbres cannelés selon l'une quelconque des revendications 5 à 11, **caractérisé en ce que** les sections (12, 13, 14, 15) possèdent au moins en partie des longueurs axiales différentes.

13. Elément d'actionnement de soupape (1) pour soupapes d'échanges de gaz d'un moteur à combustion interne, avec un arbre à cames (3) pourvu au moins en partie d'un endentement extérieur (11) ainsi que plusieurs supports de came (4) pourvus d'un endentement intérieur (10), guidés solidairement en rotation et de façon à pouvoir être déplacés dans le plan axial sur l'arbre à cames (3), **caractérisé par** la présence d'une jonction par arbres cannelés selon l'une quelconque des revendications précédentes entre l'arbre à came de base (3) formant l'arbre et chacun des supports de came (4) formant l'arbre creux ou le moyeu.
